# EUROPÄISCHE PATENTSCHRIFT

(11) **EP 0 760 739 B1**
(45) Veröffentlichungstag und Bekanntmachung des Hinweises auf die Patenterteilung: **07.04.1999**
(21) Anmeldenummer: 96908042.3
(22) Anmeldetag: 14.03.1996
(51) Int. Cl.: B29C 55/16

(54) **TRANSPORTVORRICHTUNG FÜR EINE BEWEGTE MATERIALBAHN, INSBESONDERE EINE RECKANLAGE FÜR KUNSTSTOFF-FOLIENBAHNEN**
TRANSPORT DEVICE FOR A CONTINUOUS MOVING SHEET, IN PARTICULAR A STRETCHING DEVICE FOR A PLASTIC FILM SHEET
DISPOSITIF DE TRANSPORT POUR UNE BANDE DE MATERIAU EN MOUVEMENT, NOTAMMENT DISPOSITIF D'ETIRAGE POUR BANDES DE FILM PLASTIQUE

(30) Priorität: 21.03.1995 DE 19510281
(43) Veröffentlichungstag der Anmeldung: 12.03.1997
(73) Patentinhaber: Brückner Maschinenbau GmbH, 83313 Siegsdorf (DE)
(72) Erfinder: BREIL, Jürgen, D-83355 Grabenstätt (DE); STEFFL, Manfred, D-83224 Grassau (DE)
(74) Vertreter: Flach, Dieter Dipl.-Phys.
(86) Internationale Anmeldenummer: EP9601113
(87) Internationale Veröffentlichungsnummer: WO9629190

(56) Entgegenhaltungen:
- DE-A- 3 333 938
- DE-C-19 510 281
- FR-A- 2 147 876
- FR-A- 2 317 076
- US-A- 3 500 515
- US-A- 5 072 493
- DATABASE WPI Section Ch, Derwent Publications Ltd., London, GB; Class A32, AN 73-72307U XP002005726 & JP,B,48 038 779 (JAPAN STEEL WORK LTD)

## Beschreibung

Die Erfindung betrifft eine Transportvorrichtung für Materialbahnen, insbesondere eine Reckanlage für Kunststoff-Folienbahnen nach dem Oberbegriff des Anspruches 1.

Insbesondere bei der Kunststoffolien-Herstellung werden Vorrichtungen zum Strecken einer bewegten Materialbahn eingesetzt.

Bei der Kunststoffolien-Herstellung sind sowohl Quer-, Längs- als auch simultane Reckanlagen bekannt, bei welchen die Materialbahn, d.h. die Kunststoffolienbahn, gleichzeitig einer Längs- und Querreckung unterzogen wird.

Dazu werden sog. Kluppen oder Kluppenwagen verwendet, die längs einer Führungseinrichtung, in der Regel einer Führungsschiene verfahren werden.

Eine Vorrichtung zum simultanen biaxialen Strecken einer bewegten Materialbahn, insbesondere Kunststoffbahn ist beispielsweise aus der DE 37 41 582 C2 bekannt geworden. Beidseitig der zu behandelnden Materialbahn laufen dabei längs von Führungsschienen eine Vielzahl von Kluppen oder Kluppenwagen um, die mittels Kettenscherenhebeln miteinander verbunden sind. Durch die spezifische separate Führung der Kettenhebel läßt sich dabei in der Reckzone gezielt der Abstand der einzelnen Kluppenwagen vergrößern, so daß sich darüber das Längs- und Querreckverhältnis einstellen läßt. Auf den Kluppenwagen sind dabei bekanntermaßen Spanneinrichtungen vorgesehen, mittels derer der Rand der zu behandelnden Materialbahn ergriffen und fortbewegt werden kann.

Eine Vorrichtung zum Breitstrecken sowie Fixieren von Folienbahnen ist beispielsweise aus der DE 40 06 440 C2 bekannt geworden, bei welcher die einzelnen Ketten- oder Kluppenwagen mittels einer umlaufenden Transportkette fortbewegt werden, wobei der Abstand der einzelnen Kluppenwagen im wesentlichen unverändert bleibt.

Auch wenn aus der DE 33 33 938 A1 bekannt ist, die Kluppenkette beispielsweise über drei versetzt zueinander liegende und ortsfeste Gleitführungen abzustützen und auch aus der DE 33 39 150 A1 zu entnehmen ist, die darin beschriebene Kluppenkette mit einem lösbaren Gleitstück zu versehen, so haben sich in der Praxis gleichwohl entsprechende Transportvorrichtungen mit Kluppenwagen durchgesetzt, die über mehrere in Längsrichtung der Führungsbahn auf dem Kluppenwagen beabstandet sitzende und den Kluppenwagen in Vertikal- und Horizontalrichtung abstützende Rollen geführt sind.

Um die Produktionsleistung zu erhöhen, nehmen dabei ständig auch die Bahngeschwindigkeiten zu. Bahngeschwindigkeiten von mehr 300 m/min sind keine Seltenheit. Insbesondere auch im Hinblick auf die nicht zu vernachlässigende Masse der einzelnen Kluppenwagen nimmt dabei naturgegebenermaßen die Beanspruchung der Rollen und Lager sowie der Führungsschienen zu.

So wird beispielsweise für Simultanreckanlagen gemäß der US 5 072 493 u. a. auch zur Erhöhung der Bahngeschwindigkeiten und zur Minimierung der Störanfälligkeit vorgeschlagen, einen ebenfalls mittels Laufrollen längs einer Führungsschiene verfahrbaren Kluppenwagen mittels eines Linearmotors anzutreiben. Dieser eröffnet die Möglichkeit, daß grundsätzlich die Kluppenwagen einzeln angesteuert und beschleunigt werden können, und daß beispielsweise abweichend zu der Simultan-Reckanlage gemäß der DE 37 41 582 C2 auf die die einzelnen Kluppenwagen verbindenden Kettenhebel verzichtet werden kann.

Gleichwohl nehmen aber mit den zunehmenden Transport- und Bahngeschwindigkeiten der vorbewegten Bahn und damit der Kluppenwagen die an dem Kluppenwagen ansetzenden Kräfte derart zu, daß aufgrund der auftretenden Belastungen und insbesondere auch Lagerbelastungen die Lebensdauer des gesamten Transportsystems beschränkt ist und häufig aufgrund von Ausfällen Reparaturen notwendig sind.

Bei der aus der US 5 072 493 vorbekannten Simultan-Reckanlage fehlen also die die einzelnen Kluppenwagen verbindenden und diese in vertikaler Richtung stabilisierenden Ketten, da die Kluppenkörper auf dem Führungssystem unabhängig voneinander bewegt werden. Dabei stellen sich an das Rollensystem und die Rollenlager besonders hohe Anforderungen bezüglich der Führungsgenauigkeit. Insbesondere bei Bahngeschwindigkeiten von über 300 m/min erfordert dies extrem hohe Fertigungstoleranzen, was natürlich zu einer beachtlichen Kostenerhöhung beiträgt. Aber selbst die Einhaltung hoher Fertigungstoleranzen führt zu einer vergleichsweise begrenzten Lebensdauer der Rollenschienen und Laufrollen und/oder zu einer deutlichen Einschränkung der maximal zulässigen Geschwindigkeit, um die Beanspruchung zu verringern. Verursacht wird dies zum einen durch die hohe Flächenpressung beim Rollkontakt und zum anderen durch die Grenzen der Lagerlebensdauer, die durch Versagensmechanismen des tribologischen Systems bei den auftretenden hohen umdrehungsgeschwindigkeiten, Lagerkräften und Temperaturen verkürzt wird.

Aufgabe der vorliegenden Erfindung ist es von daher, ausgehend von dem zuletzt genannten Stand der Technik eine verbesserte Transportvorrichtung für eine bewegte Materialbahn, insbesondere eine Reck-Anlage für Kunststoff-Folienbahnen zu schaffen, die insbesondere hohe Umlaufgeschwindigkeiten bei vergleichsweise niedrigen Belastungen für die Kluppenwagen ermöglicht.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Mit der vorliegenden Erfindung lassen sich mehrere entscheidende Vorteile realisieren.

Die erfindungsgemäße Vorrichtung, insbesondere für eine Simultan-Reckanlage umfaßt Kluppenkörper, die längs eines Führungssystems unter Verwendung von Linearmotoren angetrieben werden. Erfindungsgemäß ist dabei vorgesehen, daß im oder am Linearmotor eine Führungsschiene oder ein Führungsschienenabschnitt (sog. Dual-Rail) zum Einsatz kommt, wodurch eine besonders günstige Aufteilung der Kräfte auf die Führungseinrichtung ermöglicht wird. Desweiteren wird durch diese Anordnung eine geringe Bauhöhe des Transportsystems gewährleistet, weshalb die zur Aufheizung benötigte Luftströmung im Falle der Reckung von Kunststoffolienbahnen näher an die Folie herangeführt werden kann. Dadurch ergibt sich insgesamt eine verkürzte Bauweise der Anlage und somit vor allem geringere Investitionskosten.

Erfindungsgemäß ist vorgesehen, daß dabei die Kluppenkörper zumindest teilweise mittels einer Gleitlagerung an dem Führungsschienensystem verfahrbar abgestützt sind. In einer bevorzugten Ausführungsform erfolgt die Lagerung ausschließlich mittels einer Gleitlagerung. Insbesondere durch die optimale Verteilung der Kräfte im Hinblick auf die erfindungsgemäße Ausgestaltung und Anordnung der Führungsschiene am bzw. im Linearmotorantrieb integriert ergibt sich durch die Verwendung der Gleitlagerung eine besonders optimale Verteilung der Kräfte. Dadurch läßt sich die Lebensdauer insgesamt deutlich erhöhen und die Ausfallrisiken für derartige Kluppenanordnungen vermindern. Für den Betreiber einer Anlage bedeutet dies eine höhere Ausstoßleistung bei geringeren Stillstandszeiten.

In einer besonders bevorzugten Ausführungsform ist vorgesehen, daß sich die ein oder mehreren Gleitkörper nicht oder nicht nur an dem eigentlichen Führungsschienenabschnitt gleitend abstützen, sondern daß die Wirkfläche und Gehäusewandung des Linearmotors selbst (oder eine den Linearmotor schützenden Abdeckwand) als Gleitfläche dient. In einer Weiterbildung der Erfindung ist es dabei möglich, den zwischen dem Linearmotor und dem auf dem Kluppenkörper vorgesehenen Magneten (Permanentmagneten) gebildete Luftspalt durch das Material des Gleitkörpers auszufüllen.

Insbesondere die um 90° quer zu der am Linearmotor ausgebildeten Gleitfläche wirkenden Abstützkräfte können an dem den Linearmotor überragenden separaten Führungsschienenabschnitt abgestützt werden, wobei hier bevorzugt ebenfalls eine Gleit- oder aber auch eine separate Rollenlagerung möglich ist.

Weitere Vorteile, Einzelheiten und Merkmale der Erfindung ergeben sich nachfolgend aus den anhand von Zeichnungen dargestellten Ausführungsbeispielen. Dabei zeigen im einzelnen:
- Figur 1 :: eine schematische Querschnittsdarstellung senkrecht zur Längsrichtung einer Führungsschiene und eines darauf längs verfahrbaren mittels eines Linearmotors antreibbaren Kluppenwagens;
- Figur 2a :: eine schematische geschnittene Perspektivdarstellung eines an dem Führungsschienensystem gehaltenen Kluppenkörpers;
- Figur 2b :: eine entsprechende perspektivische Darstellung des in Figur 2a gezeigten Kluppenkörpers;
- Figur 3 :: eine vergrößerte schematische Detaildarstellung des in Figur 1 gezeigten obenliegenden Linearmotors;
- Figur 4 :: eine schematische Seitenansicht teilweise im Schnitt des Linearmotors mit der integrierten Führungsschiene;
- Figur 5 :: eine zu Figur 1 abgewandelte Querschnittsdarstellung eines weiteren Ausführungsbeispieles.

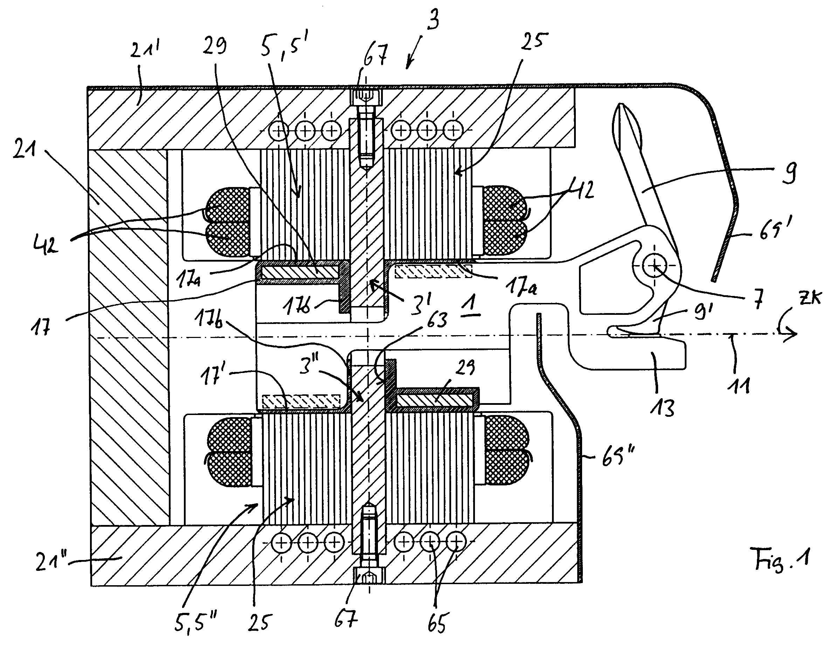

In Figur 1 ist in schematischer Frontansicht ein Kluppenkörper 1 gezeigt, der längs eines Führungsschienensystems 3 - also senkrecht zur Zeichenebene - mittels eines Linearmotorantriebes 5 verfahrbar ist.

Der Kluppenkörper 1 umfaßt einen um eine Schwenkachse 7 verschwenkbaren Einspann- oder Kluppenhebel 9.

Längs der strichpunktierten Materialbahn-Ebene 11 wird eine Materialbahn, im Falle der Kunststoffolien-Herstellung eine zu reckende Kunststoffolienbahn am Rand zwischen der unteren Einspannstelle 9' des Kluppenhebels 9 und dem sog. Kluppentisch 13 während der Fortbewegung der Materialbahn und insbesondere während des Reckvorganges eingespannt gehalten. Dadurch werden längs der Pfeildarstellung über die Materialbahn Kräfte auf den Kluppenkörper 1 eingeleitet. An der gegenüberliegenden Seite der Materialbahn läuft symmetrisch eine entsprechende Kluppenanordnung an einem weiteren Führungsschienensystem.

Das Führungsschienensystem 3 besteht aus einer oberen Führungsschiene 3' und einer unteren Führungsschiene 3'', die im gezeigten Ausführungsbeispiel gemäß Figur 1 übereinander in einer gemeinsamen Führungsschienenebene liegen, die senkrecht zur Materialbahn-Ebene 11 und damit senkrecht zu den Materialbahn-Zugkräften ZK ausgerichtet ist.

Die beiden Führungsschienen 3' und 3'' sind Teil eines im Querschnitt C-förmigen Führungsschienenträgers 21. Der obere und untere Führungsschienenträgerabschnitt 21' bzw. 21'' dienen gleichzeitig als Motorhalterung für die Linearmotoren 5. Der obere und der untere Linearmotor 5' bzw. 5'' umfassen ein Blechpaket 25 mit einer Vielzahl von ferromagnetischen Blechen (Eisen), die beispielsweise unter Aufbringung einer Isolierschicht zur Vermeidung oder Verringerung von Wirbelstromeffekten voneinander elektrisch isoliert sind.

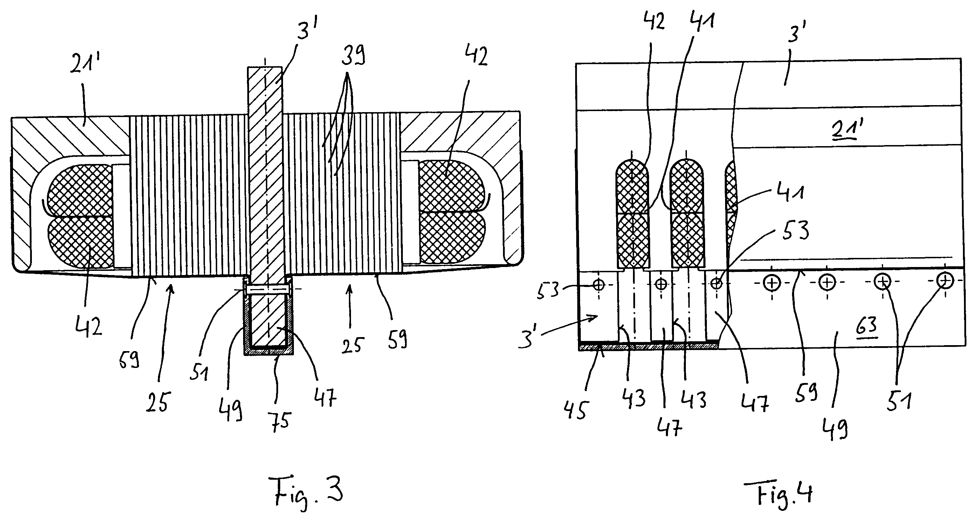

Wie aus der schematischen Querschnittsdarstellung gemäß Figur 3 und 4 hervorgeht, sind in den deckungsgleich aufeinander liegenden ferromagnetischen Bleche 39 gegenüberliegend zu den als Motorhalterung dienenden Führungsschienenträgerabschnitten 21' bzw. 21'' in Längsrichtung beabstandete Ausnehmungen 41 eingebracht, in welche eine Vielzahl von Einzeldrähten hindurch verlegt ist, die die Wicklungsköpfe 42 bilden.

In der Mitte des jeweiligen Linearmotors 5, 5'', d.h. in der Mitte des jeweiligen Blechpaketes 25, ist die zugeordnete Führungsschiene 3' bzw. 3'' der als Dual-Rail ausgebildeten Schienenanordnung 3 integriert eingebaut.

Aus der Seitendarstellung gemäß Figur 4 ist auch ersichtlich, daß die betreffende obere oder untere Führungsschiene 3', 3'' mit einer Vielzahl von Ausnehmungen 43 versehen ist. Diese Ausnehmungen 43 sind von dem freien Rand 45 (der dem Kluppenkörper zugewandt liegt) in die Führungsschienen 3', 3'' eingebracht, wobei die Ausnehmungen 43 quer zur Materialbahn und dabei deckungsgleich zu den Ausnehmungen 41 in den Blechen 39 eingearbeitet sind. Damit stehen entsprechende fingerförmige Abschnitte 47 über den unteren Rand des Blechpaketes über. Diese Anordnung bietet eine leichtere Möglichkeit, die Windungsköpfe 42 durch Einlegen der Wicklungsdrähte in die betreffenden Ausnehmungen herzustellen. Zur Erzielung einer durchgängigen Laufschiene wird dann über die fingerförmigen Abschnitte 47 das jeweilige in Figur 3 und 4 gezeigte U-förmige Laufschienenprofil 49 aufgesteckt und z. B. mittels Nieten 51 gesichert, die die in den fingerförmigen Abschnitten 47 eingebrachten Bohrungen 53 durchsetzen.

Die Höhe des Laufschienenprofils 49 ist dabei so gewählt, daß es bis zu der das Blechpaket 25 begrenzenden Wandfläche reicht, die im gezeigten Ausführungsbeispiel als Gleitfläche 59 dient.

Wie nämlich aus Figur 1 ersichtlich ist, werden in der schnittdarstellung gemäß Figur 1 im wesentlichen winkelförmige Gleitkörper 17 verwendet, die einmal mit einem Gleitkörperschenkel 17a auf der den Linearmotor begrenzenden Gleitfläche 59 und zum anderen mit ihrem senkrecht dazu ausgerichteten Gleitkörperschenkel 17b an der betreffenden seitlichen Anlagefläche 63 der Führungsschienen 3', 3'' anliegt, die durch die Seitenwand des die Führungsschiene überdeckenden Laufflächenprofils 49 gebildet ist. Die Gleitkörper 17 können aber auch so gebildet sein, daß sie sich ergänzend oder alternativ zur Abstützung an der Gleitfläche 59 am Blechpaket 25 der Linearmotoren an dem nach unten bzw. nach oben ausgerichtet liegenden (also quer zur Materialbahn ausgerichteten) Führungsschienenrand abstützen.

Die erwähnten Gleitkörper 17 sind durch geeignete Weise am Kluppenkörper 1 gehalten und befestigt (beispielsweise mittels einer Formschlußverbindung, also unter Ausbildung von ineinander greifenden, am Gleitkörper und/oder am angrenzenden Abschnitt der Führungsausnehmungen 19 am Kluppenkörper 1 ineinander greifen; ebenso ist aber alternativ oder ergänzend auch eine kraftschlüssige Verankerung des Gleitkörpers 17 beispielsweise durch Anwenden einer Klebe- oder Vulkanisierungstechnik möglich).

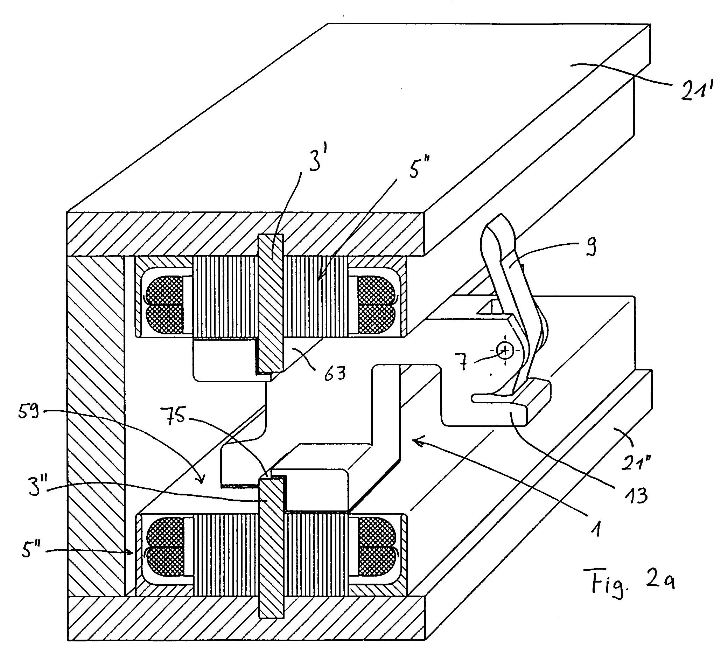

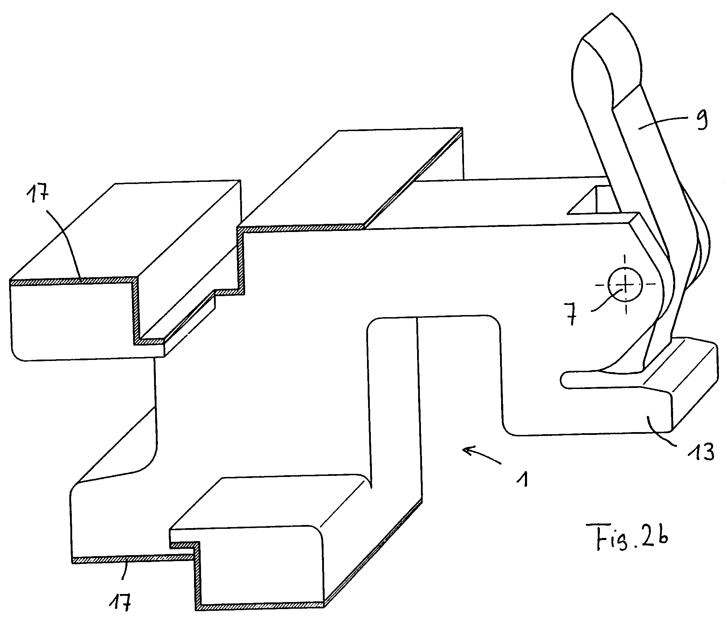

Wie sich aus Figur 1 und Figur 2a bzw. 2b nur ansatzweise ergibt, können die Gleitkörper 17 bzw. einzelne Gleitkörperabschnitte in der Regel in bezug auf die parallel zur Führungsschiene 3 verlaufende Länge des Kluppenkörpers 1 kürzer dimensioniert sein. Dadurch ist es möglich, daß am jeweiligen Kluppenkörper in dessen Längsrichtung versetzt liegend mehrere Gleitkörper oder Gleitkörperabschnitte ausgebildet sind.

Wie aus der Darstellung aus Figur 2a und 2b auch ersichtlich ist, liegen aufgrund der Geometrie des Kluppenkörpers die zur betreffenden Führungsschiene 3' bzw. 3'' jeweils gegenüberliegenden Gleitkörper 17 oder Gleitkörperabschnitte 17 in Längsrichtung der Führungsschiene versetzt, um einen möglichst optimalen Führungsabstand des Kluppenwagens 1 gegenüber der Führungsschiene zu gewährleisten.

Wie sich insbesondere aus Figur 1 ferner ergibt, sind die am Kluppenkörper sitzenden Magneten 29, d.h. die Permanentmagneten 29, jeweils in den betreffenden Schenkeln 17a der Gleitkörper 17 eingegossen. Mit anderen Worten wird dadurch der zwischen den Magneten 29 und der angrenzenden Wandfläche der Blechpakete 25 der Linearmotoren 5', 5'' gebildete Luftspalt durch das Material des Gleitkörpers 17 überbrückt. Dadurch kann auch ein vordefinierter Abstand zwischen Permanentmagneten 29 und der betreffenden Gleitfläche 59 am Linearmotor optimal eingehalten werden.

Aus dem erläuterten Aufbau geht auch hervor, daß das Führungsschienensystem 3 zur Abstützung des jeweiligen Kluppenkörpers 1 nicht nur die zentral angeordneten beiden Führungsschienen 3' und 3'', sondern gleichzeitig auch die Blechpakete 25, mit anderen Worten also die Linearmotoren selbst umfaßt. Denn die Gleitkörper stützen sich in senkrechter Richtung zur Materialbahn der zu reckenden Kunststoffolie direkt an den Linearmotoren und in Parallelrichtung zur Materialbahn an den entsprechenden Seitenwänden der Führungsschienen 3' und 3'' ab.

Nur der Vollständigkeit halber wird noch erwähnt, daß in den als Motorhalterung dienenden oberen und unteren Führungsschienenträger 21', 21'' Kühlbohrungen 65 eingebracht sind, durch welche hindurch Kühlmittel strömt. Dazwischen liegend ist die rückwärtige Längsseite der Führungsschiene in einer entsprechenden U-förmigen Ausnehmung mittels Schrauben 67 lösbar verankert. Gleichzeitig sind kluppenseitig noch eine obere und eine untere Abschirmung 69' und 69'' vorgesehen, wobei die obere Abschirmung 69' den Kluppenhebel 9 materialbahnseitig überdeckt und sich etwa bis in Höhe zur Schwenkachse 7 des Kluppenhebels 9 erstreckt, wohingegen die untere Abschirmung 69'' rückwärtig vom Kluppentisch angeordnet ist und sich bis in etwa zu einer Höhe erstreckt, die bevorzugt oberhalb der Einspannebene 11 der Materialbahn liegt.

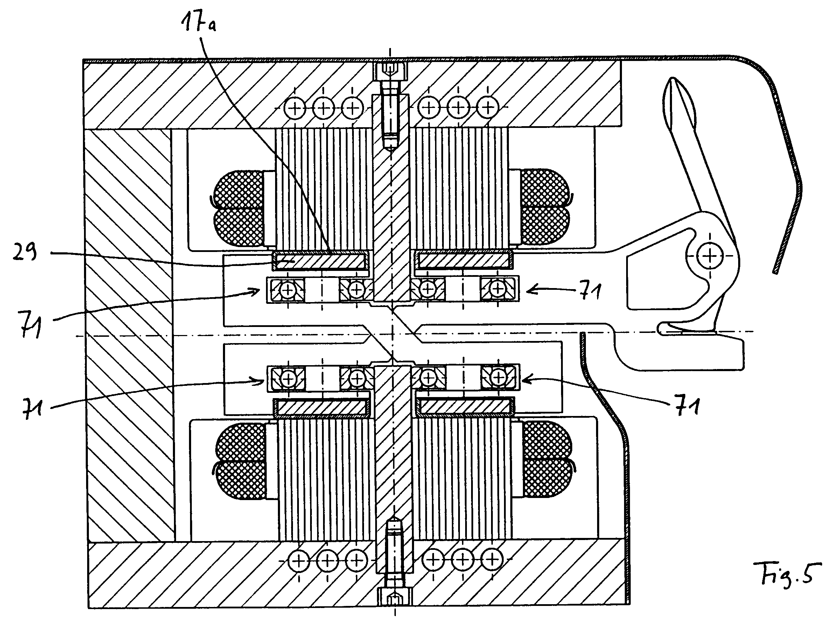

Das Ausführungsbeispiel gemäß der Figur 5 unterscheidet sich von dem Ausführungsbeispiel gemäß Figur 1 dadurch, daß die Gleitlagerung lediglich in Vertikalrichtung gegenüber den linearmotorseitigen Gleitflächen 59 wirksam ist und die im wesentlichen in Parallelrichtung zur Materialbahn wirkende Abstützung über Laufrollen 71 erfolgt, die sich an den beiden gegenüberliegenden Seiten- oder Anlageflächen 63 an der jeweiligen Führungsschiene 3', 3'' abstützen.

Diese Ausführungsform bietet Vorteile insbesondere im Falle der Verstreckung von dickeren Kunststoffolien oder solchen Materialien, die höhere spezifische Reckkräfte erfordern, wie z. B. Polyamid, wobei insbesondere in dem zuletzt genannten Fall größere Kräfte für die Gleitlagerung entstehen. Insbesondere durch den zwischen der Mittellinie des Führungssystems und der Folieneinspannvorrichtung gebildeten Hebelarm entstehen zusätzliche Lagerkräfte. Diese zusätzlichen Lagerkräfte werden gemäß dem Ausführungsbeispiel nach Figur 5 über die erwähnten Laufrollen 71 abgestützt, während die vertikalen Kräfte, die durch die Anziehungskräfte der für den Linearantrieb benötigten Permanentmagnete 29 entstehen, weitgehend ausbalanciert und über die großflächige Gleitlagerung abgestützt wird.

Schließlich können aber auch abweichend von dem Ausführungsbeispiel gemäß Figur 1 Gleitkörper 17 oder Gleitkörperabschnitte verwendet werden, die sich nicht nur an den Seitenflächen in zur Materialbahn paralleler Richtung, sondern darüber hinaus auch an der stirnseitigen, horizontal ausgerichteten Seitenwand 75 (Figur 3) der Führungsschienenabschnitt 3', 3'' abstützen. Damit könnte die entsprechend Abstützung in Vertikalrichtung an den Blechpaketen 25 der Linearmotoren wegfallen. Es würde dann der erwähnte Luftspalt zwischen dem Permanentmagneten 29 und der angrenzenden Wand der Blechpakete 25 verbleiben.

Die Gleitkörper oder Gleitkörperabschnitte 17 können in diesem Fall in Querschnittsdarstellung entsprechend Figur 1 U-förmig gestaltet sein und das erwähnte Laufflächenprofil 49 übergreifen. Ebenso können auch nicht U-förmige, sondern jeweils winkelförmige Gleitabschnitte verwendet werden, die sich jeweils an der Seitenwand 75 der Führungsschienenabschnitte 3', 3'' und jeweils an der einen oder gegenüberliegenden Anlagefläche 63 des Laufschienenprofils 49 abstützen und dabei in Längsrichtung des Kluppenwagens versetzt liegen.

## Patentansprüche

1. Transportvorrichtung für eine bewegte Materialbahn, insbesondere eine Reckanlage für Kunststoff-Folienbahnen, mit einem zumindest eine Führungsschiene (3', 3'') umfassenden Führungsschienensystem (3), längs welchem sich Kluppenkörper (1) zum Einspannen und Halten einer bewegten Materialbahn (11) mittels eines Linearmotor-Antriebes (5) verfahrbar sind, **gekennzeichnet durch** die folgenden Merkmale
- die zumindest eine Führungsschiene (3', 3'') ist im zugeordneten Linearmotor (5', 5'') integriert eingebaut,
- der jeweilige Kluppenkörper (1) ist mittels eines Gleit- oder eines kombinierten Gleit- und Rollenlagers gegenüber dem Führungsschienensystem (3) abgestützt, und
- der Kluppenkörper (1) stützt sich an der Führungsschiene (3', 3'') oder an der Führungsschiene (3', 3'') und dem jeweils zugeordneten Linearmotor (5', 5'') zumindest mittelbar ab.

2. Vorrichtung nach Anspruch 1, mit einem Linearmotor-Antrieb (5), welcher einen oberen und einen unteren Linearmotor (5', 5'') umfaßt, **dadurch gekennzeichnet**, daß das Schienensystem (3) jeweils zwei dem zugehörigen Linearmotor (5', 5'') zugeordnete Führungsschienen (3', 3'') umfaßt, wobei die Führungsschienen (3', 3'') im wesentlichen quer zur Materialbahn beabstandet liegen, und der Kluppenkörper (1) zwischen dem oberen und unteren Linearmotor (5', 5'') und der oberen und unteren Führungsschiene (3', 3'') abgestützt geführt ist.

3. Vorrichtung nach Anspruch 1 oder 2, **dadurch gekennzeichnet**, daß die Führungsschienen (3', 3'') in der Mitte des jeweiligen Linearmotors (5', 5'') integriert eingebaut sind.

4. Vorrichtung nach einem der Ansprüche 1 bis 3, **dadurch gekennzeichnet**, daß die jeweilige Führungsschiene (3', 3'') in Richtung Kluppenkörper (1) den jeweils zugeordneten Linearmotor (5', 5'') überragt.

5. Vorrichtung nach einem der Ansprüche 1 bis 4, **dadurch gekennzeichnet**, daß das Führungsschienensystem (3) neben den Führungsschienen (3', 3'') und den daran ausgebildeten Gleit- oder Gleit- und Laufflächen auch eine am jeweiligen Linearmotor (5', 5'') gebildete weitere Gleit- oder Lauffläche (59) umfaßt.

6. Vorrichtung nach einem der Ansprüche 1 bis 5, **dadurch gekennzeichnet**, daß am Kluppenkörper (1) Gleitkörper (17) gehalten sind, die sich mit ihrem einen vorzugsweise im wesentlichen parallel zur Materialbahn (11) ausgerichteten Schenkel (17a) an der den Linearmotor (5', 5'') begrenzenden Wand unter Ausbildung einer Gleitfläche (59) abstützen.

7. Vorrichtung nach Anspruch 6, **dadurch gekennzeichnet**, daß die Dicke des sich linearmotorseitig abstützenden Schenkels (17a) des Gleitkörpers (17) der Dicke des ansonsten zwischen dem Linearmotor (5', 5'') und dem kluppenkörperseitig befindlichen Permanentmagneten (29) gebildeten Luftspaltes entspricht.

8. Vorrichtung nach einem der Ansprüche 6 oder 7, **dadurch gekennzeichnet**, daß der sich linearmotorseitig abstützende Schenkel (17a) des Gleitkörpers (17) taschenförmig gebildet ist und im Inneren den Permanentmagneten (29) umfaßt.

9. Vorrichtung nach einem der Ansprüche 6 bis 8, **dadurch gekennzeichnet**, daß der Gleitkörper (17) zumindest einen weiteren, vorzugsweise rechtwinklig zum ersten Schenkel (17a) ausgerichtet liegenden zweiten Schenkel (17b) umfaßt, der sich an der jeweils angrenzenden Seiten- und Anlagefläche (63) der Führungsschiene (3', 3'') abstützt.

10. Vorrichtung nach einem der Ansprüche 1 bis 9, **dadurch gekennzeichnet**, daß der Kluppenkörper (1) sich an den aufeinanderzu ausgerichtet liegenden Führungsschienenrändern (74) abstützt.

11. Vorrichtung nach einem der Ansprüche 1 bis 10, **dadurch gekennzeichnet**, daß der Kluppenkörper (1) im wesentlichen in Querrichtung zur Materialbahn (11) mittels einer Gleitlagerung und parallel zur Ebene der Materialbahn (11) mittels einer Rollenlagerung gestützt und gehalten ist, wobei sich die Laufrollen (71) an den seitlichen Anlageflächen (63) der den Linearmotor (5', 5'') überragenden Führungsschiene (3', 3'') abstützen.

12. Vorrichtung nach einem der Ansprüche 6 bis 11, **dadurch gekennzeichnet**, daß die Gleitkörper (17) bezogen auf die Gesamtlänge des Kluppenkörpers (1) kürzer ausgebildet sind und bevorzugt jeweils an einem vor- und einem nachlaufenden Ende des Kluppenkörpers sitzen.

13. Vorrichtung nach einem der Ansprüche 6 bis 12, **dadurch gekennzeichnet**, daß die auf der einen Seite der Führungsschiene (3'. 3'') sitzenden Gleitkörper (17) zu den jeweils auf der anderen Seite dazu angeordneten Gleitkörper (17) oder Gleitkörperabschnitten in Längsrichtung des Kluppenkörpers (1) versetzt und in Seitenansicht überlappungsfrei angeordnet sind.

14. Vorrichtung nach einem der Ansprüche 1 bis 13, **dadurch gekennzeichnet**, daß die Linearmotoren (5', 5'') eine Vielzahl von mit kluppenseitig eingebrachten Ausnehmungen (41) versehenen Blechen (39) umfassen, und daß die vorzugsweise mittig in dem aus den Blechen (39) gebildeten Blechpaket (25) angeordnete Führungsschiene (3', 3'') mit zu den Ausnehmungen (41) in den Blechen (39) deckungsgleich eingebrachten Ausnehmungen (43) versehen ist.

15. Vorrichtung nach Anspruch 14, **dadurch gekennzeichnet**, daß auf den den Linearmotor (5', 5'') überragenden Abschnitt der Führungsschiene (3', 3'') ein Laufflächenprofil (49) aufgesetzt und an der betreffenden Führungsschiene (3', 3'') befestigt ist.

## Claims

1. Transport device for a moving material web, in particular a stretching system for plastic film webs, having a guide rail system (3) comprising at least one guide rail (3', 3'') along which tenter elements (1) for clamping and retaining a moving material web (11) can be moved by a linear motor drive (5), characterized by the following features
- the at least one guide rail (3', 3'') is integrally incorporated in the associated linear motor (5', 5''),
- the respective tenter element (1) is supported with respect to the guide rail system (3) by means of a sliding bearing or a combined sliding and roller bearing and
- the tenter element (1) is supported on the guide rail (3', 3'') or on the guide rail (3', 3'') and the respectively associated linear motor (5', 5''), at least indirectly.

2. Device according to Claim 1, having a linear motor drive (5) which comprises an upper and a lower linear motor (5', 5''), characterized in that the rail system (3) in each case comprises two guide rails (3', 3'') assigned to the associated linear motor (5', 5''), the guide rails (3', 3'') being located at intervals essentially transversely to the material web, and the tenter element (1) being guided supported between the upper and lower linear motor (5', 5'') and the upper and lower guide rail (3', 3'').

3. Device according to Claim 1 or 2, characterized in that the guide rails (3', 3'') are integrally incorporated in the centre of the respective linear motor (5', 5'').

4. Device according to one of Claims 1 to 3, characterized in that the respective guide rail (3', 3'') projects beyond the respectively associated linear motor (5', 5'') in the direction of the tenter element (1).

5. Device according to one of Claims 1 to 4, characterized in that, in addition to the guide rails (3', 3'') and the sliding surfaces or sliding and running surfaces formed thereon, the guide rail system (3) also comprises a further sliding or running surface (59) formed on the respective linear motor (5', 5'').

6. Device according to one of Claims 1 to 5, characterized in that on the tenter element (1) there are retained sliding elements (17) which, with their limb (17a) which is preferably aligned essentially parallel to the material web (11), are supported on the wall adjoining the linear motor (5', 5''), while forming a sliding surface (59).

7. Device according to Claim 6, characterized in that the thickness of the limb (17a) of the sliding element (17) which is supported on the linear motor side corresponds to the thickness of the air gap otherwise formed between the linear motor (5', 5'') and the permanent magnet (29) which is located on the tenter element side.

8. Device according to one of Claims 6 or 7, characterized in that the limb (17a) of the sliding element (17) which is supported on the linear motor side is designed to have a pocket shape and encloses the permanent magnet (29) inside it.

9. Device according to one of Claims 6 to 8, characterized in that the sliding element (17) comprises at least one further second limb (17b) which is preferably located aligned at right angles to the first limb (17a) and is supported on the respectively adjacent side surface and bearing surface (63) of the guide rail (3', 3'').

10. Device according to one of Claims 1 to 9, characterized in that the tenter element (1) is supported on the guide rail edges (74) which are located aligned towards one another.

11. Device according to one of Claims 1 to 10, characterized in that the tenter element (1) is supported and retained, essentially in the direction transverse to the material web (11) by means of a sliding bearing, and parallel to the plane of the material web (11) by means of a roller bearing, the running rollers (71) being supported on the lateral bearing surfaces (63) of the guide rail (3', 3'') projecting beyond the linear motor (5', 5'').

12. Device according to one of Claims 6 to 11, characterized in that the sliding elements (17), referred to the overall length of the tenter element (1), are of shorter design and are preferably seated in each case on a leading end and a trailing end of the tenter element.

13. Device according to one of Claims 6 to 12, characterized in that the sliding elements (17) which are seated on one side of the guide rail (3', 3'') are arranged offset, in the longitudinal direction of the tenter element (1), with respect to the sliding elements (17) or sliding element sections arranged in each case for this purpose on the other side, and without any overlap in side view.

14. Device according to one of Claims 1 to 13, characterized in that the linear motors (5', 5'') comprise a multiplicity of metal sheets (39) which are provided with cutouts (41) made on the tenter side, and in that the guide rail (3', 3''), which is preferably arranged centrally in the laminated core (25) formed from the metal sheets (39), is provided with cutouts (43) which are made to coincide with the cutouts (41) in the metal sheets (39).

15. Device according to Claim 14, characterized in that a running surface profile (49) is fitted onto that section of the guide rail (3', 3'') which projects beyond the linear motor (5', 5''), and the said profile is fastened to the relevant guide rail (3', 3'').

## Revendications

1. Dispositif de transport pour une bande de matériau en mouvement, en particulier installation d'étirage pour des bandes de film en matière plastique, comportant un système de rail de guidage (3) avec au moins un rail de guidage (3', 3''), le long duquel des corps de pince (1) sont mobiles pour serrer et maintenir une bande de matériau en mouvement (11) au moyen d'un entraînement à moteur linéaire (5), caractérisé en ce que
- ledit au moins un rail de guidage (3', 3'') est monté de façon intégrée dans le moteur linéaire associé (5', 5''),
- le corps de pince respectif (1) est supporté par rapport au système de rail de guidage (3) au moyen d'un palier coulissant ou d'un palier combiné à coulissement/roulement, et
- le corps de pince (1) s'appuie contre le rail de guidage (3', 3'') ou bien du moins indirectement contre le rail de guidage (3', 3'') et contre le moteur linéaire respectivement associé (5', 5'').

2. Dispositif selon la revendication 1, comportant un entraînement à moteur linéaire (5) qui comprend un moteur linéaire supérieur et un moteur linéaire inférieur (5', 5''), caractérisé en ce que le système de rails (3) comprend au moins deux rails de guidage (3', 3'') associés respectivement au moteur linéaire correspondant (5', 5''), les rails de guidage (3', 3'') étant écartés sensiblement transversalement à la bande de matériau, et en ce que le corps de pince (1) est guidé en appui entre les moteurs linéaires supérieur et inférieur (5', 5'') et entre les rails de guidage supérieur et inférieur (3', 3'').

3. Dispositif selon l'une ou l'autre des revendications 1 et 2, caractérisé en ce que les rails de guidage (3', 3'') sont montés de façon intégrée au milieu du moteur linéaire respectif (5', 5'').

4. Dispositif selon l'une quelconque des revendications 1 à 3, caractérisé en ce que le rail de guidage respectif (3', 3'') dépasse en direction du corps de pince (1) au-delà du moteur linéaire respectivement associé (5', 5'').

5. Dispositif selon l'une quelconque des revendications 1 à 4, caractérisé en ce que le système de rails de guidage (3) comprend, outre les rails de guidage (3', 3'') et les surfaces de coulissement ou les surfaces de coulissement/roulement, également une autre surface de coulissement ou de roulement (59) réalisée sur le moteur linéaire respectif (5', 5'').

6. Dispositif selon l'une quelconque des revendications 1 à 5, caractérisé en ce que sur le corps de pince (1) sont maintenus des corps coulissants (17) qui s'appuient par l'un de leurs bras (17a) dirigé de préférence sensiblement parallèlement à la bande de matériau (11) contre la paroi délimitant le moteur linéaire (5', 5''), en formant une surface de coulissement (59).

7. Dispositif selon la revendication 6, caractérisé en ce que l'épaisseur du bras (17a), s'appuyant du côté moteur linéaire, du corps coulissant (17) correspond à l'épaisseur de l'entrefer formé par ailleurs entre le moteur linéaire (5', 5'') et l'aimant permanent (29) situé du côté corps de pince.

8. Dispositif selon l'une ou l'autre des revendications 6 et 7, caractérisé en ce que le bras (17a), s'appuyant du côté moteur linéaire, du corps coulissant (17) est réalisé en forme de poche et comprend à l'intérieur l'aimant permanent (29).

9. Dispositif selon l'une quelconque des revendications 6 à 8, caractérisé en ce que le corps coulissant (17) comprend au moins un autre second bras (17b) dirigé de préférence à angle droit par rapport au premier bras (17a), qui s'appuie contre la surface latérale ou surface d'appui respectivement adjacente (63) du rail de guidage (3', 3'').

10. Dispositif selon l'une quelconque des revendications 1 à 9, caractérisé en ce que le corps de pince (1) s'appuie contre les bordures de rail de guidage (74) qui sont dirigées l'une vers l'autre.

11. Dispositif selon l'une quelconque des revendications 1 à 10, caractérisé en ce que le corps de pince (1) est supporté et maintenu sensiblement en direction transversale à la bande de matériau (11) au moyen d'un palier coulissant et parallèlement au plan de la bande de matériau (11) au moyen d'un palier à roulement, les rouleaux (71) s'appuyant contre les surfaces d'appui latérales (63) du rail de guidage (3', 3'') dépassant au-delà du moteur linéaire (5', 5'').

12. Dispositif selon l'une quelconque des revendications 6 à 11, caractérisé en ce que les corps coulissants (17) sont réalisés plus courts que la longueur totale du corps de pince (1), et en ce qu'ils sont posés de préférence respectivement à une extrémité en avance et à une extrémité en retard du corps de pince.

13. Dispositif selon l'une quelconque des revendications 6 à 12, caractérisé en ce que les corps coulissants (17) posés sur l'un des côtés du rail de guidage (3', 3'') sont agencés en décalage en direction longitudinale du corps de pince (1) et sans chevauchement en vue latérale par rapport aux corps coulissants (17) ou tronçons de corps coulissants agencés respectivement sur l'autre côté.

14. Dispositif selon l'une quelconque des revendications 1 à 13, caractérisé en ce que les moteurs linéaires (5', 5'') comprennent une multitude de tôles (39) pourvues d'évidements (41) ménagés du côté pince, et en ce que le rail de guidage (3', 3'') agencé de préférence au milieu dans l'empilage de tôles (25) formé par les tôles (39) est pourvu d'évidements (43) ménagés en coïncidence avec les évidements (41) dans les tôles (39).

15. Dispositif selon la revendication 14, caractérisé en ce que sur le tronçon du rail de guidage (3', 3''), qui dépasse au-delà du moteur linéaire (5', 5''), est posé un profilé de surface de roulement (49) qui est fixé sur le rail de guidage correspondant (3', 3'').
